# EUROPEAN PATENT SPECIFICATION

(11) **EP 2 990 360 B1**
(45) Date of publication and mention of the grant of the patent: **23.10.2019**
(21) Application number: 14788144.5
(22) Date of filing: 01.04.2014
(51) Int. Cl.: B65G 17/40, B65G 47/66, B65G 17/08, B65G 17/32

(54) **CONVEYOR CHAIN TRANSFER SYSTEM WITH GROOVED PUSHERS**
FÖRDERKETTEN-TRANSFERSYSTEM MIT GERILLTEN SCHIEBERN
SYSTÈME DE TRANSFERT DE CHAÎNE TRANSPORTEUSE À ORGANES DE POUSSÉE RAINURÉS

(30) Priority: 22.04.2013 ES 201330583
(43) Date of publication of application: 02.03.2016
(73) Proprietor: Nuñez Bajo, Magdalena, 47003 Valladolid (ES)
(72) Inventor: SAN MIGUEL NUÑEZ, Javier, E-47012 Valladolid (ES)
(74) Representative: Temiño Ceniceros, Ignacio
(86) International application number: PCT/ES2014/070253
(87) International publication number: WO 2014/174132

(56) References cited:
- EP-A1- 1 300 349
- EP-A1- 2 145 843
- EP-A1- 2 168 890
- WO-A1-2008/152171
- WO-A1-2014/014716
- WO-A1-2014/014716
- WO-A2-2006/074077
- GB-A- 2 138 376
- JP-U- S59 130 818
- US-A1- 2003 085 106
- US-A1- 2009 084 659
- US-A1- 2011 253 509
- US-B1- 6 382 404
- US-B1- 6 695 135
- US-B1- 8 113 340

## Description

The object of the present invention is a conveyor chain of the type structured by means of a plurality of links preferably made of plastic which are hinged to one another and are driven by sprockets which can be made of plastic or not, and comprise a pusher with raised ribs and/or a grooved pallet at a certain height.

Another object of the present invention is a transfer system for transferring the driven objects from a first chain to a second conveyor chain, such that said transfer is optimum, without the risk of the objects breaking thereon.

The invention is particularly applicable to handling frozen products or the like which, given their low temperature, tend to adhere to the links of the chains, which involves a detachment problem when they reach the product output end, as well as risks of breaking when impacting on the receiving chain.

### PRIOR ART

There is widespread use of conveyor chains based on links, there being innumerous solutions in that regard. One of the most common solutions is that chain in which a planar and frequently grooved core is defined in each link, although it can also be closed, depending on the type of practical application of the chain. The core of each link generally coincides with the thickness thereof, or with that of at least one of its modules, from the longitudinal edges of which there emerge a series of protuberances like one-piece elements distributed in a staggered pattern on both edges, and making the link look like a dual "comb", these protuberances furthermore being perforated to give passage to the hinge pins between links, which chains per se are driven by means of sprockets.

Depending on the envisaged trajectory, there are conveyor chains in which some of their links are formed as blades emerging perpendicularly from the general plane of the chain and extending from one longitudinal edge thereof to the other, such that such blades define with one another a series of housings along the conveyor chain which are designed to house the transported products, which are duly stabilized on upwardly and downwardly inclined sections, as shown in document US 4,832,183, for example.

Document EP 1 300 349 describes a modular conveyor belt comprising a plurality of grooved pushers characterized in that they comprise a series of improvements in the fastening and stability thereof in relation to the conveyor chain assembly.

In addition, document ES 2 344 216 describes an endless conveyor belt comprising a plurality of grooved pushers and characterized in that it further comprises a plurality of rollers extending through the thickness of the conveyor belt beyond the upper and lower surfaces of consecutive pushers.

Nevertheless, said grooved elements are exclusively aimed at and designed for being applied as a pusher or stop for the product, defining different stability criteria (as in document EP 1 300 349) or mobility criteria for the product (as in document ES 2 344 216). None of these documents considers the need to make transfer on and self-cleaning of the conveyor chain easier, or the possibility of literally pushing and driving the product on the conveyor chain.

Usually in a product handling facility, one conveyor chain has to unload onto another one, and said unloading must often take place on a conveyor chain located on a lower level.

With certain types of products, falling from the first conveyor chain to the second conveyor chain entails a significant risk of breaking, particularly taking into account that the conveying blades or grooved pushers make greater spacing in height between the chains necessary, and when the products are frozen products, said products tend to stick to the links of the chain due to environmental moisture condensation and freezing thereof between product and chain, such that such products often times cannot fall due to gravity onto the lower conveyor belt, but rather remain adhered to the lower section of the first conveyor chain, hanging from it, so they are excluded from the production line, which involves considerable economic loss and these hanging products can even get hooked on the frame in lower support areas, which in many cases is catastrophic for the belt and breaks it.

Document WO2006074077 (A2) discloses a conveyor having a flighted belt and providing a gapless end-off or end-on transfer of articles. The conveyor belt includes segmented flights at spaced intervals along its length. Each segmented flight includes slots dividing the flight into laterally spaced segments, or dogs. A transfer platform allows for a smooth transfer of articles onto or off the end of the belt. Fingers on the transfer platform separated by gaps extend to distal finger tips that are positioned close to the conveying surface of the belt at an end of the conveyor. The transfer platform is laterally aligned with the gaps positioned to coincide with the flight segments to permit them to pass cleanly through as the belt articulates about a sprocket set at the end of a carry way. Optional article-advancing rollers in the conveyor belt between consecutive flights propel articles forward along the belt to a forward flight.

Finally, the document GB2138376 (A) relates to conveyor chains comprising a plurality of pivotally interconnected link structures having longitudinally extending side-by-side ribs with exposed upper peripheral edges which collectively define a supporting surface for products to be conveyed, wherein some of said ribs project above longitudinally adjacent other said ribs. GB2138376 (A) discloses a conveyor chain transfer system according to the preamble of claim 1.

### DISCLOSURE OF THE INVENTION

The present invention proposes a conveyor chain with its own transfer system that solves, with the features of claim 1, in a satisfactory manner the technical problems described in the current state of the art. The chain object of the present invention on one hand assures optimal product transfer conditions from a first chain to a second conveyor chain, eliminating problems of said products adhering to the chain and preventing impacts from being able to cause them to break. Furthermore, said transfer takes place from a substantially lower height than in other solutions belonging to the state of the art.

More specifically, correct product transfer from a first chain to a second conveyor chain is achieved as a result of the chain and system object of the invention focusing their features on replacing conventional continuous conveying blades from one side edge to the other side edge of the conveyor chain, and wherein a plurality of arms emerge from the corresponding link, defining a grooved pusher, with the particularity that said arms are close to one another, assuring correct conveyance of the objects to be transported, having a width that is slightly less than the width determined by the link and the protuberances, such that it could make a complete turn in the transfer between chains without any type of interference or collision.

In addition, the transfer system is defined by a second comb, the prongs of which are intended for tangentially penetrating the grooves of the conveyor belt located at a higher level and the end of which is located near the receiving conveyor belt, such that when the transfer starts, the prongs of this comb, located in an inclined position, fully penetrate the grooves of the links, acting on the lower face of the objects and causing the automatic and inevitable detachment thereof from the corresponding conveyor chain, such that given its own nature and on account of the grooves in the conveying element, said comb is no problem whatsoever for mobility of the conveying element, as previously indicated, because the prongs of the blades also penetrate the grooves defined by the oblique comb.

Once the objects are detached from the conveyor chain supplying them, said products gently descend by the indicated comb towards the second conveyor chain located on a lower level due to the effect of gravity, and from there they are driven by the latter. The inclination of the transfer comb limits the necessary height offset between the first conveyor chain and second conveyor chain.

More specifically, in a first aspect the invention comprises a conveyor chain formed from a plurality of links and comprising at least one conveying element designed to convey objects located on the conveyor chain assembly. Said conveying element extends in relation to the horizontal defined by the upper surface of said chain and the conveying element, being hinged to it. The most important feature of the conveying element of the present invention is that it comprises three regions that are different in height, i.e., an upper region, an intermediate region and a lower region. The upper region is defined by the upper surface of a plurality of arms extending from the upper surface of the transport surface or chain. The intermediate region is the transport region and is defined by the upper surface of bodies designed to receive the prongs of the transfer comb. The lower region is the region immediately below the intermediate region or transport surface and is designed to receive prongs of the transfer comb and the height of which measured from the support surface of the chain is equal to or greater than the difference in height between the transport surface minus the thickness in height of the prongs.

In addition, the transfer system between conveyor chains of the type that are at different height levels and comprising at least one conveyor chain as previously described is characterized in that it comprises a comb intended for adopting a slightly inclined position, such that a slope is established between the conveyor chain and the receiving area or chain adjacent to the comb; and the comb is provided with a plurality of prongs intended for facing the grooves defined by the arms of the conveying element, and more specifically, the prongs are intended so that the free end thereof is housed in the grooves such that the prongs are located below the plane of support of the objects located on the chain. The difference in height between the intermediate region and lower region is greater than or equal to the thickness in height of the prongs of the transfer comb.

Throughout the description and claims the word "comprises" and variants thereof do not seek to exclude other technical features, additives, components or steps. For the persons skilled in the art, other objects, advantages and features of the invention will be understood in part from the description and in part from the practice of the invention. The following examples and drawings are provided by way of illustration. Furthermore, the present invention covers all possible combinations of particular and preferred embodiments herein indicated.

### BRIEF DESCRIPTION OF THE DRAWINGS

A set of drawings which help to better understand the invention and which are expressly related to an embodiment of said invention presented as a non-limiting example thereof is very briefly described below.
Figure 1 shows the transfer system object of the present invention for a conveyor chain like that proposed in the present invention and including a comb intended for adopting an inclined position, such that a slope is established between the conveyor chain and the receiving area or chain adjacent to the comb.
Figure 2 shows a second view of the transfer system shown in Figure 1.
Figure 3 shows a perspective view of the conveying element in an embodiment of the conveyor chain.
Figure 4 shows a view of the link corresponding to the embodiment of the conveying element of Figure 3.
Figure 5 shows a perspective view of the conveying element in another practical embodiment, in which the elements of the chain are attached to one another by means of projections with inner cylinders and hooks.
Figure 6 shows a view of the conveyor chain object of the invention including the conveying element of Figure 5.
Figure 7 shows a view of another embodiment of the conveying element.
Figure 8 shows a view of the conveyor chain object of the invention including the conveying element of Figure 7.

### PREFERRED EMBODIMENT OF THE INVENTION

As can be seen in the attached drawings, the conveyor chain (100) object of the present invention comprises a plurality of links hinged to one another and comprises, intercalated between two links, at least one grooved conveying element (20) designed to convey objects located on the conveyor chain assembly. In the present invention, through the different practical embodiments, the conveyor chain (100) always has a grooved conveying element (20) but the shape of the links and their attachment to one another, and obviously their attachment with the conveying element, can vary. Different embodiments, each of which can be used in certain circumstances, as well as a combination thereof, without detracting from the object of the invention, are shown in the present description.

The conveying element (20) comprises a plurality of arms (21) extending in relation to the horizontal defined by the surface of the links and is furthermore hinged to said arms (21).

According to the invention, the grooved conveying elements (20) comprise three regions that are different in height, an upper region, an intermediate region and a lower region. The upper region is defined by the upper surface of a plurality of arms (21) extending from the upper surface of the transport surface or chain. The intermediate region is the transport region and is defined by the upper surface of bodies (24) designed to receive the prongs (201) of the transfer comb (200). The lower region is the region immediately below the intermediate region or transport surface and is designed to receive the prongs (201) of the transfer comb (200) and the height of which measured from the support surface of the chain is equal to or greater than the height of the transport surface minus the thickness of the prongs.

It should be mentioned that the terms front and rear in this description refer to the main movement axis of the chain, depicted in the attached drawings by means of an arrow.

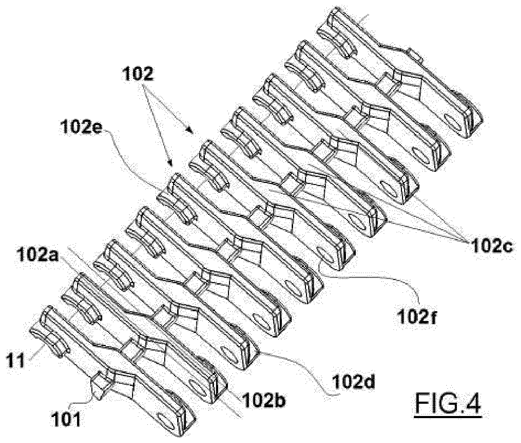

In the embodiment shown in Figure 4, each of the links is formed by at least one central shaft (101) which is transverse to the direction of the passage of the chain and attaches a plurality of bodies (102) attached to one another to the mentioned central shaft (101), and in turn comprising three different regions: a first front region (102a) and a second rear region (102b), parallel to and offset with one another by a specific length which corresponds to the width of the third attachment region (102c) said width being about twice the width of the first and the second region.

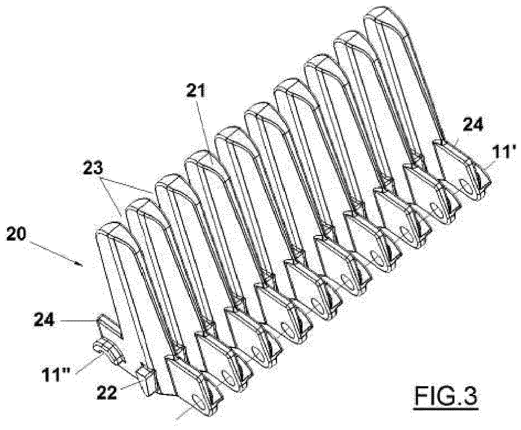

In the example of Figure 4, the links are completed with semicircular side protuberances (102d, 102e) in this particular embodiment, although they can be of any other shape as long as they cover the upper part or region of through holes (102f) located at each end of each perpendicular body (102), these holes being designed to allow passage of the shafts (11, 11', 11") hinging the links and pushers or conveying element (20) forming the conveyor chain of the invention together, as observed in Figure 3, which is the conveying element accompanying the link of Figure 4.

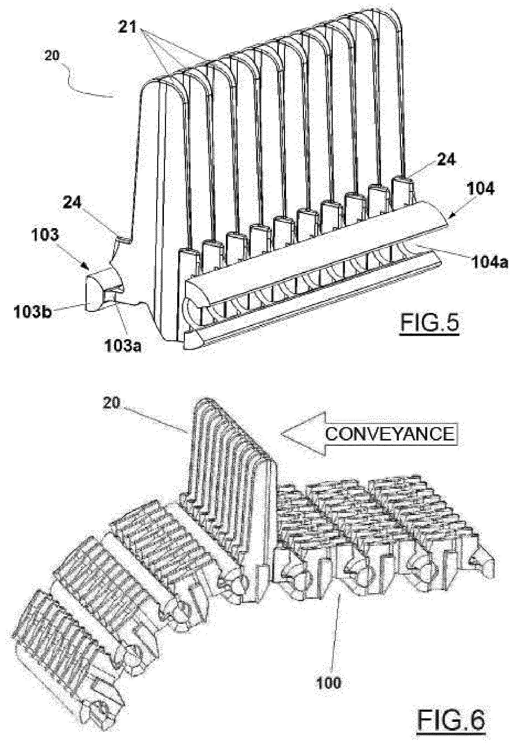

In another embodiment of the invention, for example, the embodiment shown in Figure 5, the conveying element (20) comprises a male attachment element (103) located at the end of the first front region and extending along the entire conveying element, in the direction transverse to the direction of passage of the chain. The male attachment element (103) comprises a planar extension (103a) ending in a semicircular protuberance (103b). The conveying element also comprises a female attachment element (104) in the second rear region (102b) complementing the male attachment means (103) and having a semicircular channel (104a) inside of which the semicircular protuberance (103b) of the male attachment element is introduced. This configuration obviously corresponds with the links that are suitable for that attachment, as shown in Figure 6.

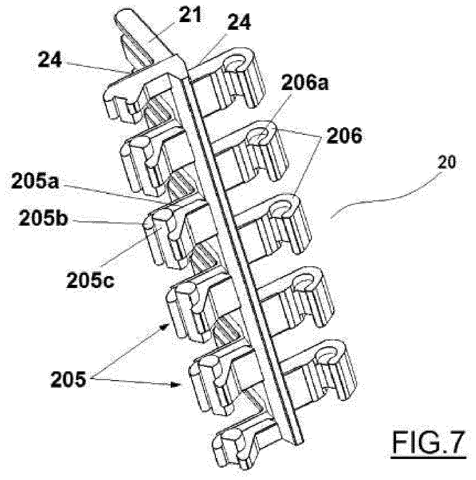

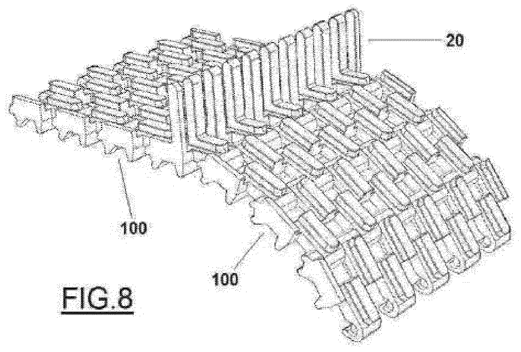

In another example shown in Figure 7, the conveying element (20) comprises projections (205) located at the ends of the perpendicular bodies of the first front part. Said projections (205) have a first area extending in the direction of the perpendicular body and have couplings (205a) at the end thereof with a semicircular area (205b) from the center of which central cylinders (105c) start in the transverse direction of the link. Said central cylinders (205c) start from the center of each of the semicircular areas (205b) and extend at both ends of said semicircular areas. Starting from the second rear region there are curved hooks (206) inside of which, in the center, there are inner cylinders (206a). Therefore, when two links are placed one after the other in the chain, the semicircular areas (205b) of one of the links are placed between the hooks (206) of the consecutive link such that the central cylinders (205c) are inserted inside the hooks (206), being in contact inside said hooks (206) with the inner cylinders (206c). In addition, the conveying element (20) also comprises a plurality of arms (21) extending vertically in relation to perpendicular bodies (24). Said conveying element (20) is attached to the links to form a conveyor chain, as shown in Figure 8.

The most important feature of the conveying element (20) of the present invention is that it comprises three regions that are different in height, i.e., an upper region, an intermediate region and a lower region. The upper region is defined by the arms (21) extending in relation to the upper surface of the chain. The intermediate region is the transport region and is defined by the upper surface of the perpendicular bodies (24). The lower region is the region immediately after the intermediate region and is designed to receive the prongs of the transfer comb.

More specifically, the arms (21) extend vertically in relation to two perpendicular bodies (24), said bodies being located parallel to and offset with one another by a specific length which corresponds to the width of the area from where the arms (21) extend, extending vertically in relation to the lips, said arms (21) having a substantially rhomboidal base, a rounded vertex and a width which decreases along the height.

In one embodiment of the invention, the conveying element (20) further comprises semicircular side protuberances covering or protecting a through hole located at each end of the perpendicular bodies (24), these holes being designed to allow passage of the shafts (11', 11") hinging the conveying elements (20) to the links.

It can generally be established that the base of the links and conveying element (20) is the same. This is because the arms (21) of the conveying element (20) must make the same turn as the links of the chain, and they must therefore have an identical structure so as to not hinder said turn.

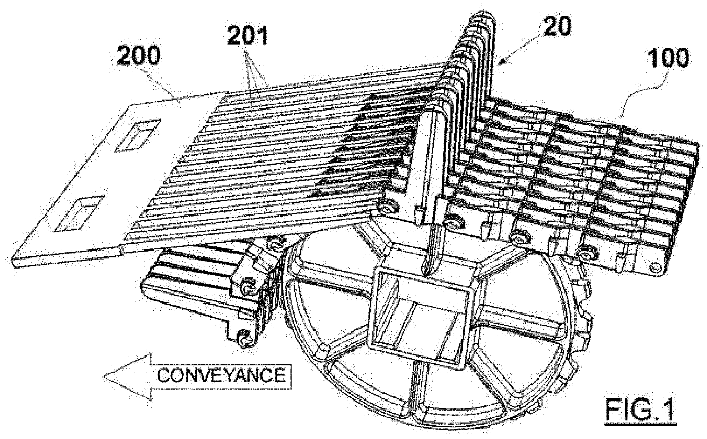

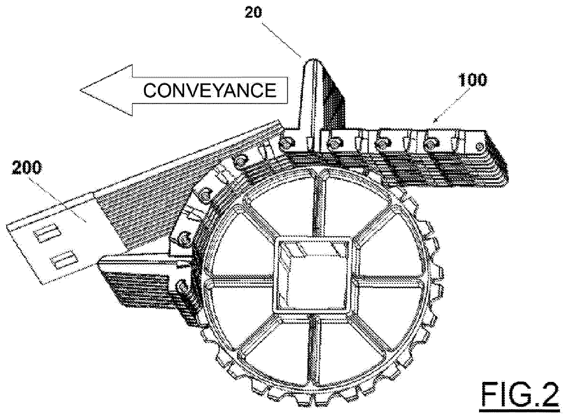

Complementarily to the chain (100), the transfer system according to the invention is completed with a comb (200) intended for adopting the inclined position shown in Figures 1 and 2, such that a slope is established between the conveyor chain (100) and the receiving area or chain adjacent to the comb (200), which is not shown in the attached drawings.

The comb (200) is provided with a plurality of prongs (201) intended for facing the spaces defined by the arms (21) of the conveying element (20), i.e., the grooves (23), and more specifically, the prongs (201) are intended so that the free end thereof is housed in the grooves (23) such that the prongs (201) are located below the plane of support of the objects located on the chain (100), and more specifically in the lower region defined for the conveying element (20).

Therefore when the products on the conveyor chain (100) reach the discharge end of the conveyor chain (100), the prongs (201) of the comb (200) penetrate said chain (100) below the support level where objects are supported on the chain, forcing them to become detached from same in the event that they are frozen products or products that adhere to same for any other reason.

The objects are therefore transferred from the chain (100) to the comb (200) solving the problem resulting from adhesion, and which objects, given the inclination of the comb (200), will slide along same, without having the chance to adhere to it, until reaching the receiving area (usually another conveyor chain (100)), being gently placed on the latter due to the minor slope of said comb (200), i.e., without the risk of such objects breaking either due to the effect of the fall and impacting on the second receiving area or chain.

## Claims

1. A conveyor chain transfer system comprising: **(a)** a conveyor chain (100) comprising a plurality of links; and **(b)** a transfer comb (200) comprising a plurality of prongs (201); wherein the conveyor chain (100) is formed from said plurality of links hinged to another and comprises, at least, one conveying element (20) arranged to convey objects located on the conveyor chain (100) assembly; and wherein said conveying element (20) extends vertically in relation to the horizontal defined by the upper or transport surface of said chain (100) and is hinged thereto; and wherein the conveying element (20) comprises three regions that are different in height: **(i)** an upper region that is defined by the upper surface of a plurality of arms (21) extending vertically from the upper or transport surface of the conveyor chain (100); **(ii)** an intermediate region of transport defined by the upper surface of perpendicular bodies (24) perpendicular to the arms (21), spaced out to receive the prongs (201) of the transfer comb (200) therebetween; and **(iii)** a lower region is the region immediately below the intermediate region, the height of said lower region being arranged such that when the prongs (201) of said transfer comb (200) are received between the perpendicular bodies (24), said prongs are located below the plane of support of the objects located on the chain (100), said plane corresponding to the intermediate region, wherein the conveying element (20) laterally frames a plurality of grooves (23), such that the plurality of arms (21) forming the upper region are located such that they are parallel to and spaced out from one another by a specific length which corresponds to the width of the prongs (201) of the transfer comb (200); and wherein each prong (201) of the comb (200) faces a groove (23) defined by the arms (21) of the conveying element (20), in such a way that the free end of each prong (201) is housed in a corresponding groove (23) such that the prongs (201) are located below the plane of support of the objects located on the conveyor chain (100),
**characterized in that** the comb (200) adopts an inclined position, such that a slope is established between the conveyor chain (100) and the receiving area or chain adjacent to the comb.

2. The system according to claim 1, wherein the arms (21) have a rhomboidal base, rounded vertex and a width which decreases along the height.

3. The system according to any one of the preceding claims, wherein the lower region of the conveying element (20) further comprises side protuberances covering or protecting through holes located at each end of the perpendicular bodies (24), these holes being designed to allow passage of the shaft (11', 11") hinging the conveying elements (20) to the links.

4. The system according to claim 3, wherein the conveying element (20) is hinged to at least one link formed by at least one central shaft (101) which is transverse to the direction of the passage of the chain and joins a plurality of perpendicular bodies (102) attached to said central shaft (101), and in turn comprising three different regions: a first front region (102a) and a second rear region (102b), parallel to and transversely offset with one another by a specific length which corresponds to the width of the third attachment region (102c), said width being about twice the width of the first or second region; and comprising a plurality of through holes (102f), one at each end of each perpendicular body (102), these holes being designed to allow passage of the shafts (11, 11', 11") hinging the links and pushers or conveying element (20) together.

5. The system according to any one of claims 1-2, wherein the conveying element (20) comprises a male attachment element (103) and a female attachment element (104) designed to hinge the conveying elements (20) to the links.

6. The system according to claim 5, wherein the male attachment element (103) located at the end of the first front region and extending along the entire element, in the direction transverse to the direction of passage of the chain; and wherein the male attachment element (103) comprises a planar extension (103a) ending in a semicircular protuberance (103b); and wherein it further comprises a female attachment element (104) in the second rear region (102b) that is complemented with the male attachment means (103) and having a semicircular channel (104a) inside of which the semicircular protuberance (103b) of the male attachment element (103) is introduced.

7. The system according to any of claims 1-2, wherein the conveying element (20) comprises longitudinal projections (205) from where curved hooks (206) start, inside of which there are inner cylinders (206a) at the center hinging the conveying elements (20) to the links.

8. The system according to claim 7, wherein the projections (205) are located at the ends of the perpendicular bodies of the first front part; and wherein said projections (205) have a first area extending in the direction of the perpendicular body and have couplings (205a) at the end thereof with a semicircular area (205b) from the center of which central cylinders (205c) start in transverse direction of the link; said central cylinders (205c) start from the center of each of the semicircular areas (205b) and extend at both ends of said semicircular areas.

## Patentansprüche

1. Förderkettenübertragungssystem, Folgendes umfassend: (a) eine Förderkette (100), umfassend eine Vielzahl von Gliedern; und (b) einen Übertragungskamm (200), umfassend eine Vielzahl von Zacken (201); wobei die Förderkette (100) aus der Vielzahl der miteinander gelenkig verbundenen Glieder gebildet ist und mindestens ein zum Fördern von auf der Förderketten(100)-Baugruppe angeordneten Gegenständen angeordnetes Förderelement (20) umfasst; und wobei sich das Förderelement (20) in Bezug auf die durch die obere oder die Transportoberfläche definierte Horizontale der Kette (100) vertikal erstreckt und damit gelenkig verbunden ist; und wobei das Förderelement (20) die folgenden drei unterschiedlich hohen Bereiche umfasst: **(i)** einen oberen Bereich, der durch die obere Oberfläche einer Vielzahl von Armen (21) definiert ist, die sich vertikal von der oberen oder der Transportoberfläche der Förderkette (100) erstrecken; **(ii)** einen Zwischentransportbereich, der durch die obere Oberfläche von senkrechten Körpern (24) definiert ist, die senkrecht zu den Armen (21) sind, die beabstandet sind, um die Zacken (201) des Übertragungskamms (200) dazwischen aufzunehmen; und **(iii)** ein unterer Bereich der Bereich ist, der unmittelbar unterhalb des Zwischenbereichs ist, wobei die Höhe des unteren Bereichs so angeordnet ist, dass, wenn die Zacken (201) des Übertragungskamms (200) zwischen den senkrechten Körpern (24) aufgenommen werden, die Zacken unterhalb der Auflageebene der auf der Kette (100) angeordneten Gegenstände angeordnet sind, wobei die Ebene dem Zwischenbereich entspricht, wobei das Förderelement (20) seitlich eine Vielzahl von Nuten (23) umrahmt, sodass die Vielzahl von Armen (21), die den oberen Bereich bilden, so angeordnet ist, dass sie parallel zu und von einander um eine spezifische Länge beabstandet sind, die der Breite der Zacken (201) des Übertragungskamms (200) entspricht; und wobei jede Zacke (201) des Kamms (200) einer durch die Arme (21) des Förderelements (20) definierten Nut (23) zugewandt ist, auf eine derartige Weise, dass das freie Ende jedes Zacken (201) in einer entsprechenden Nut (23) aufgenommen ist, sodass die Zacken (201) unter der Auflageebene der auf der Förderkette (100) angeordneten Gegenstände angeordnet sind,
**dadurch gekennzeichnet, dass** der Kamm (200) eine schiefe Position annimmt, sodass eine Neigung zwischen der Förderkette (100) und dem Aufnahmebereich oder der dem Kamm benachbarten Kette hergestellt wird.

2. System nach Anspruch 1, wobei die Arme (21) eine rautenförmige Basis, einen abgerundeten Scheitel und eine Breite aufweisen, die entlang der Höhe abnimmt.

3. System nach einem der vorstehenden Ansprüche, wobei der untere Bereich des Förderelements (20) ferner Seitenvorsprünge umfasst, die an jedem Ende der senkrechten Körper (24) angeordnete Durchgangslöcher bedecken oder schützen, wobei diese Löcher so ausgelegt sind, dass sie den Durchtritt der Welle (11', 11") erlauben, welche die Förderelemente (20) gelenkig mit den Gliedern verbindet.

4. System nach Anspruch 3, wobei das Förderelement (20) mit mindestens einem Glied gelenkig verbunden ist, das durch mindestens eine zentrale Welle (101) gebildet wird, die quer zu der Richtung des Durchtritts der Kette ist und eine Vielzahl von an der zentralen Welle (101) befestigten senkrechten Körpern (102) verbindet und wiederum umfassend die drei folgenden unterschiedlichen Bereiche: einen ersten vorderen Bereich (102a) und einen zweiten hinteren Bereich (102b), die parallel und quer zueinander um eine spezifische Länge versetzt sind, die der Breite des dritten Befestigungsbereichs (102c) entspricht, wobei die Breite zweimal die Breite des ersten oder des zweiten Bereichs ist; und umfassend eine Vielzahl von Durchgangslöchern (102f), eines an jedem Ende jedes senkrechten Körpers (102), wobei diese Löcher so ausgelegt sind, dass sie den Durchtritt der Wellen (11, 11', 11") erlauben, welche die Glieder und die Schieber oder das Förderelement (20) gelenkig miteinander verbinden.

5. System nach einem der Ansprüche 1 bis 2, wobei das Förderelement (20) ein männliches Befestigungselement (103) und ein weibliches Befestigungselement (104) umfasst, die dazu ausgelegt sind, die Förderelemente (20) gelenkig mit den Gliedern zu verbinden.

6. System nach Anspruch 5, wobei das männliche Befestigungselement (103) an dem Ende des ersten vorderen Bereichs angeordnet ist und sich entlang des gesamten Elements in der Querrichtung zu der Durchtrittsrichtung der Kette erstreckt; und wobei das männliche Befestigungselement (103) eine ebene Verlängerung (103a) umfasst, die an einem halbkreisförmigen Vorsprung (103b) endet; und wobei es ferner ein weibliches Befestigungselement (104) in dem zweiten hinteren Bereich (102b) umfasst, das durch das männliche Befestigungsmittel (103) ergänzt wird und einen halbkreisförmigen Kanal (104a) aufweist, in den der halbkreisförmige Vorsprung (103b) des männlichen Befestigungselements (103) eingeführt wird.

7. System nach einem der Ansprüche 1 bis 2, wobei das Förderelement (20) Längsvorsprünge (205) umfasst, von denen aus gekrümmte Haken (206) ausgehen, in denen es innere Zylinder (206a) in dem Zentrum gibt, welche die Förderelemente (20) gelenkig mit den Gliedern verbinden.

8. System nach Anspruch 7, wobei die Vorsprünge (205) an den Enden der senkrechten Körper des ersten vorderen Teils angeordnet sind; und wobei die Vorsprünge (205) einen ersten Bereich aufweisen, der sich in der Richtung des senkrechten Körpers erstreckt, und Kopplungen (205a) an dem Ende davon mit einem halbkreisförmigen Bereich (205b) aufweisen, von deren Zentrum aus zentrale Zylinder (205c) in Querrichtung des Glieds ausgehen; wobei die zentralen Zylinder (205c) von dem Zentrum jedes der halbkreisförmigen Bereiche (205b) ausgehen und sich an beiden Enden der halbkreisförmigen Bereiche erstrecken.

## Revendications

1. Système de transfert de chaîne de convoyage comprenant : **(a)** une chaîne de convoyage (100) comprenant une pluralité de maillons ; et **(b)** un peigne de transfert (200) comprenant une pluralité de dents (201) ; dans lequel la chaîne de convoyage (100) est formée à partir de ladite pluralité de maillons articulés entre eux et comprend, au moins, un élément de convoyage (20) disposé pour convoyer des objets situés sur l'ensemble de chaîne de convoyage (100) ; et dans lequel ledit élément de convoyage (20) s'étend verticalement par rapport à l'horizontale définie par la surface supérieure ou de convoyage de ladite chaîne (100) et est articulé sur celle-ci ; et dans lequel l'élément de convoyage (20) comprend trois régions de hauteur différente : **(i)** une région supérieure qui est définie par la surface supérieure d'une pluralité de bras (21) s'étendant verticalement depuis la surface supérieure ou de convoyage de la chaîne de convoyage (100); **(ii)** une région intermédiaire de convoyage définie par la surface supérieure de corps perpendiculaires (24) perpendiculaires aux bras (21), espacés pour recevoir les dents (201) du peigne de transfert (200) entre eux ; et **(iii)** une région inférieure est la région située immédiatement en dessous de la région intermédiaire, la hauteur de ladite région inférieure étant disposée de telle sorte que lorsque les dents (201) dudit peigne de transfert (200) sont reçues entre les corps perpendiculaires (24), lesdites dents sont situées sous le plan de support des objets situés sur la chaîne (100), ledit plan correspondant à la région intermédiaire, dans lequel l'élément de convoyage (20) encadre latéralement une pluralité de rainures (23), de sorte que la pluralité de bras (21) formant la région supérieure sont situés de sorte qu'ils sont parallèles et espacés les uns des autres d'une longueur spécifique qui correspond à la largeur des dents (201) du peigne de transfert (200) ; et dans lequel chaque dent (201) du peigne (200) est en regard d'une rainure (23) définie par les bras (21) de l'élément de convoyage (20), de telle manière que l'extrémité libre de chaque dent (201) est logée dans une rainure correspondante (23) de sorte que les dents (201) sont situées sous le plan de support des objets situé sur la chaîne de convoyage (100), **caractérisé en ce que** le peigne (200) adopte une position inclinée, de sorte qu'une inclinaison est établie entre la chaîne de convoyage (100) et la zone ou chaîne de réception adjacente au peigne.

2. Système selon la revendication 1, dans lequel les bras (21) ont une base rhomboïdale, un sommet arrondi et une largeur qui diminue le long de la hauteur.

3. Système selon l'une quelconque des revendications précédentes, dans lequel la région inférieure de l'élément de convoyage (20) comprend en outre des protubérances latérales recouvrant ou protégeant des trous traversants situés à chaque extrémité des corps perpendiculaires (24), ces trous étant conçus pour permettre le passage de l'arbre (11', 11") articulant les éléments de convoyage (20) aux maillons.

4. Système selon la revendication 3, dans lequel l'élément de convoyage (20) est articulé à au moins un maillon formé par au moins un arbre central (101) qui est transversal au sens du passage de la chaîne et relie une pluralité de corps perpendiculaires (102) fixés audit arbre central (101), et comprenant à son tour trois régions différentes : une première région avant (102a) et une deuxième région arrière (102b), parallèles et décalés transversalement les uns des autres d'une longueur spécifique qui correspond à la largeur de la troisième région de fixation (102c), ladite largeur étant environ deux fois supérieure à la largeur de la première ou deuxième région ; et comprenant une pluralité de trous traversants (102f), un à chaque extrémité de chaque corps perpendiculaire (102), ces trous étant conçus pour permettre le passage des arbres (11, 11', 11") articulant les maillons et les poussoirs ou l'élément de convoyage (20) ensemble.

5. Système selon l'une quelconque des revendications 1-2, dans lequel l'élément de convoyage (20) comprend un élément de fixation mâle (103) et un élément de fixation femelle (104) conçus pour articuler les éléments de convoyage (20) aux maillons.

6. Système selon la revendication 5, dans lequel l'élément de fixation mâle (103) situé à l'extrémité de la première région avant et s'étendant sur tout l'élément, dans le sens transversal au sens de passage de la chaîne ; et dans lequel l'élément de fixation mâle (103) comprend une extension planaire (103a) se terminant par une protubérance semi-circulaire (103b); et dans lequel il comprend en outre un élément de fixation femelle (104) dans la seconde région arrière (102b) qui est complété par les moyens de fixation mâles (103) et ayant un canal semi-circulaire (104a) à l'intérieur duquel la protubérance semi-circulaire (103b) de l'élément de fixation mâle (103) est introduit.

7. Système selon l'une quelconque des revendications 1-2, dans lequel l'élément de convoyage (20) comprend des saillies longitudinales (205) d'où partent les crochets courbés (206), à l'intérieur desquels se trouvent des cylindres internes (206a) au centre articulant les éléments de convoyage (20) aux maillons.

8. Système selon la revendication 7, dans lequel les saillies (205) sont situées aux extrémités des corps perpendiculaires de la première partie avant ; et dans lequel lesdites saillies (205) ont une première zone s'étendant dans le sens du corps perpendiculaire et ont des raccords (205a) à leur extrémité avec une zone semi-circulaire (205b) à partir du centre de laquelle les cylindres centraux (205c) partent dans le sens transversal du maillon ; lesdits cylindres centraux (205c) partent du centre de chacune des zones semi-circulaires (205b) et s'étendent aux deux extrémités desdites zones semi-circulaires.
